# EUROPEAN PATENT SPECIFICATION

(11) **EP 3 762 583 B1**
(45) Date of publication and mention of the grant of the patent: **01.01.2025**
(21) Application number: 19764420.6
(22) Date of filing: 06.03.2019
(51) Int. Cl.: E21B 43/295, E21B 43/24, E21B 43/243

(54) **IN-SITU PROCESS TO PRODUCE SYNTHESIS GAS FROM UNDERGROUND HYDROCARBON RESERVOIRS**
IN-SITU-VERFAHREN ZUR ERZEUGUNG VON SYNTHESEGAS AUS UNTERIRDISCHEN KOHLENWASSERSTOFFRESERVOIRS
PROCESSUS IN SITU DE PRODUCTION DE GAZ DE SYNTHÈSE À PARTIR DE RÉSERVOIRS D'HYDROCARBURES SOUTERRAINS

(30) Priority: 06.03.2018 US 201862639184 P
(43) Date of publication of application: 13.01.2021
(73) Proprietor: Proton Technologies Canada Inc., Calgary, Alberta T2P 1B3 (CA)
(72) Inventor: STREM, Grant D., Calgary, Alberta T3B 4M5 (CA); GATES, Ian D., Calgary, Alberta T3G 4N7 (CA); WANG, Jingyi, Calgary, Alberta T3H 5B8 (CA)
(74) Representative: AWA Denmark A/S
(86) International application number: PCT/CA2019/050271
(87) International publication number: WO 2019/169492

(56) References cited:
- WO-A1-2017/136924
- CA-A1- 2 884 849
- GB-B- 2 391 890
- US-A1- 2003 131 995
- US-A1- 2014 076 556
- US-A1- 2014 305 640
- US-B2- 6 805 194
- US-B2- 7 669 657
- US-B2- 7 836 957
- US-B2- 7 836 957
- KAPADIA PUNITKUMAR R ET AL: "Practical process design for in situ gasification of bitumen", APPLIED ENERGY, ELSEVIER SCIENCE PUBLISHERS, GB, vol. 107, 16 March 2013 (2013-03-16), pages 281 - 296, XP028547589, ISSN: 0306-2619, DOI: 10.1016/J.APENERGY.2013.02.035

## Description

### TECHNICAL FIELD OF THE INVENTION

The technical field relates to treatment of a petroleum reservoir to produce synthesis gas and mobilized petroleum.

### BACKGROUND OF THE INVENTION

Petroleum reservoirs are abundant globally and many technologies are used to produce oil or gas from these reservoirs, including use of primary processes as well as enhanced oil recovery processes (such as water flooding, steam flooding and chemical flooding) to produce additional oil from conventional oil and gas reservoirs.

Conventional crude oil is processed by refining it into transportation fuels and feedstocks for the petrochemical industry.

For heavy oil and extra heavy oil (e.g., bitumen) the oil is viscous at original reservoir conditions and the oil cannot be produced using conventional methods, and so heavy oil and bitumen are thermally treated to lower the viscosity so that they flow more easily in the reservoir and can be produced to the surface. Thermal treatment also allows oxygen and other fluids to move within the reservoir more easily.

After heavy oil or bitumen is extracted, it is usually upgraded to synthetic crude oil which in turn is refined into transportation fuels and feedstocks for the petrochemical industry.

The production of oil or gas implies ultimate production of carbon dioxide since the oil or gas or their products are generally combusted to harvest their energy and generate carbon dioxide.

WO 2017/136924 A1 provides an example of generating hydrogen from a hydrocarbon reservoir. KAPADIA PUNITKUMAR R ET AL: "Practical process design for in situ gasification of bitumen", APPLIED ENERGY, ELSEVIER SCIENCE PUBLISHERS, GB, vol. 107, 16 March 2013 describes a process for gasification of bitumen. US 7 836 957 B2 describes oxidation and partial oxidation of a hydrocarbon resource to generate synthesis gas.

There is an ongoing need to produce fuels from oil and gas reservoirs that have relatively low carbon intensity.

### SUMMARY OF THE INVENTION

According to a first broad aspect of the present invention, there is provided a method for treating a reservoir to recover synthesis gas and mobilized petroleum according to claim 1.

In some exemplary embodiments of the first aspect, the step of heating the reservoir comprises injecting an oxidizing agent into the reservoir to oxidize at least a portion of the petroleum within the reservoir.

In some exemplary embodiments of the first aspect, the step of heating of the reservoir comprises one or more of :
injecting an oxidizing agent into the reservoir to oxidize at least a portion of the petroleum within the reservoir;
generating electromagnetic or radio-frequency waves with an electromagnetic or radio-frequency antenna placed within the reservoir;
injecting a hot material into the reservoir; and
generating heat by using a resistance-based (ohmic) heating system placed within the reservoir.

After the step of heating, some exemplary embodiments of the first aspect may comprise the step of delaying producing the produced gas stream to allow for further generation of synthesis gas. The time period for delay may depend on the operating temperature but is preferred to be in the time range from 1 week to 12 months. A more preferred time period would be from 1 week to 4 weeks.

In some exemplary embodiments of the first aspect, the method further comprises, after heating, the step of producing the produced gas stream to allow for further generation of synthesis gas. The injection of heat into the reservoir (via an oxidizing agent or radio frequency or resistance heating) may be continuous while synthesis gas production is continuous.

In some exemplary embodiments of the first aspect, dielectric heating is used to heat the reservoir. In these embodiments, the electromagnetic radiation may have a frequency in the range of about 60 Hz -1000 GHz. The preferred range of frequencies is in the range of 10 MHz to 10 GHz.

In embodiments wherein resistance-based heating, also referred to as ohmic heating, is used to heat the reservoir, the temperature may be raised to between 200 and 800°C. The preferred temperature range is between 400 and 700°C.

According to a second broad aspect of the present invention, there is provided a system for treating a reservoir to recover synthesis gas and mobilized petroleum according to claim 8.

In some exemplary embodiments of the second aspect, the apparatus for heating the reservoir comprises at least one of: an oxidizing-agent injector, an electromagnet, a radio-frequency antenna, or a hot material injector.

In some examples of the first and second aspects that are not forming part of the present invention, the produced synthesis gas is consumed in a fuel electrochemical cell device or combusted to generate steam for power generation or steam for oil recovery or is used as a chemical feedstock for the production of chemicals such as fuel, plastic, methanol, hydrogen, sulphur, and urea.

In some examples of the first and second aspects that are not forming part of the present invention, oil or other fluids are intermittently or continuously produced from the reservoir either through the same well(s) or additional wells which may be vertical, horizontal, deviated, or other geometries.

Reducing carbon dioxide intensity can, in some embodiments, involve using in situ gasification to produce synthesis gas, comprising steam, carbon monoxide, carbon dioxide, and hydrogen as well as methane and other hydrocarbons sourced as solution gas dissolved in the oil or in free gas phase. If nitrogen is injected it is also generally a component of the synthesis gas. If sulphur is present, sulphur compounds such as H2S can be part of the synthesis gas. The process then produces a synthesis gas product to the surface.

The produced synthesis gas is an alternative energy vector or feedstock gas for petrochemical products that can be produced to the surface from petroleum reservoirs. The produced synthesis gas can be combusted on surface to generate power or heat or consumed in fuel cell devices for production of power or used as a feedstock for methanol, liquid fuel, plastics, ammonia, hydrogen, graphene, and urea production.

In-situ conversion of oil or gas or both, and in particular, conventional crude oil, heavy oil, and bitumen or natural gas, to synthesis gas is currently considered to be a desirable next-generation technology. However, no commercially-viable process is currently being used.

In broad aspects, methods and systems described herein view petroleum resources as massive sources of synthesis gas; not only the petroleum but also the formation water which can supply hydrogen to the generated synthesis gas, and supply additional oxidizer within the reservoir.

In general, the present specification describes methods to treat oil reservoirs (such as for example conventional oil, heavy oil, oil sands reservoirs, carbonate oil reservoirs, natural gas, hydrogen sulphides) to recover synthesis gas. Some exemplary methods include injection of oxygen or a rich-oxygen stream into the reservoir to combust a fraction of the oxidizable fluids in the reservoir. During this part of the process, no fluids are produced to the surface. After the target temperature is achieved in the reservoir, injection may stop and the reservoir is allowed to soak during which time the remaining oxygen in the reservoir is consumed and gasification reactions and the water-gas shift reaction may take place. During these reactions, hydrogen and carbon oxides are produced within the reservoir. The production well when opened for production produces a mixture of hydrogen, carbon oxides, water (synthesis gas), hydrocarbon gases, and hydrogen sulphides to the surface. After the synthesis gas production rate drops to a threshold value, then oxygen injection might start once again and the process can be repeated multiple times until the overall synthesis gas production rate drops to a threshold value. Thus, the process yields synthesis gas from the hydrocarbons and water that sit within the reservoir. Water or steam or combustible fuels or waste products such as organic material or sewage or other fluids or particles may be injected into the reservoir with the oxygen or separately from it.

In some exemplary embodiments, ingredients for synthesis gas production from oil can include heat, oil, and water. Oxidation of the reservoir by injecting oxygen into the reservoir is one means to generate heat within the reservoir. The reactions that occur in the reservoir at elevated temperatures can include low and high temperature oxidation, pyrolysis (thermal cracking), aquathermolysis (hydrous pyrolysis or thermal cracking reactions in the presence of water), gasification reactions, and the water-gas shift reaction.

The present method can also be used in oil or gas reservoirs where the water content of the reservoir is considered high such that in normal practice, these reservoirs would not be produced for oil or gas, respectively. The method taught here can be used in high water content petroleum reservoirs since hydrogen is sourced not only from the petroleum but also the water within the reservoir. Thus, the method taught here can be used in reservoirs where the high water content renders them less valuable than rich-oil saturated reservoirs. Thus, the method converts previously less valuable petroleum reservoirs to valuable energy and chemical feedstock sources since the hydrogen is sourced from both the petroleum as well as the water in the reservoir.

Where synthesis gas includes sulphur compounds such as H₂S, the hydrogen can be separated from the H₂S to create a valuable source of hydrogen.

A detailed description of exemplary embodiments of the present invention is given in the following. It is to be understood, however, that the invention is not to be construed as being limited to these embodiments. The exemplary embodiments are directed to particular applications of the present invention, while it will be clear to those skilled in the art that the present invention has applicability beyond the exemplary embodiments set forth herein.

### BRIEF DESCRIPTION OF THE DRAWINGS

Features and advantages of embodiments of the present application will become apparent from the following detailed description and the appended drawings, in which:
FIG. 1A to FIG. 1C are diagrammatic representations of stages of a first exemplary embodiment of the present invention wherein petroleum reservoir is heated by oxidizing a fraction of the petroleum within the reservoir.
FIG. 2 is a diagrammatic representation of a second exemplary embodiment of the present invention wherein the petroleum reservoir is heated by using an electromagnetic / radio frequency antenna placed within the reservoir.
FIG. 3 is a diagrammatic representation of a third exemplary embodiment of the present invention comprising multiple production wells.
FIG. 4 is a diagrammatic representation of a fourth exemplary embodiment of the present invention wherein an oxidizing agent is continuously injected into the oil or gas reservoir to produce hydrogen.
FIG. 5 is a diagrammatic representation of a fifth exemplary embodiment of the present invention wherein one of the wells has a resistance-heating cartridge within the well which is used to heat the reservoir to produce synthesis gas.
FIG.6 is a diagram illustrating some of the reactions that may occur in the methods described herein which occur within the reservoir to produce synthesis gas.

Exemplary embodiments of the present invention will now be described with reference to the accompanying drawings.

### DETAILED DESCRIPTION OF EXEMPLARY EMBODIMENTS

Throughout the following description specific details are set forth in order to provide a more thorough understanding to persons skilled in the art. However, well known elements may not have been shown or described in detail to avoid unnecessarily obscuring the disclosure. The following description is not intended to be exhaustive or to limit the invention to the precise form of any exemplary embodiment. Accordingly, the description and drawings are to be regarded and interpreted in an illustrative, rather than a restrictive, sense.

The present invention relates to treatment of an oil or gas reservoir for production of synthesis gas from the petroleum and water within the reservoir. The treatment includes heating the reservoir to enable gasification and water-gas shift reactions to produce synthesis gas within the reservoir and then using a production well to produce hydrogen from the reservoir.

High water content in oil and gas reservoirs is typically thought to be disadvantageous for oil or gas production. The methods described herein show that high water content is a benefit for the production of synthesis gas since water supplies hydrogen. Many of the reactions that produce synthesis gas source the hydrogen from the water in the reservoir - under the temperatures of the reactions, the formation water is converted to steam which then participates through steam reforming reactions with the hydrocarbons in the reservoir.

High H₂S content in oil and gas reservoirs is typically thought to be disadvantageous for oil and gas production. The methods described herein show that hydrogen can be separated from the H₂S and provide the benefit of carbonless energy and/or petrochemical feedstock.

Existing in-situ energy production processes from oil and gas reservoirs produce either oil or gas or both to the surface.

In some embodiments, the present methods take a different approach with respect to the following factors: timing of heating of the reservoir, timing of in-situ gasification and water-gas shift reactions, and production of synthesis gas from the reservoir. All of the methods here have several common steps.

First, the reservoir is heated - one exemplary method would be oxygen injection where in-situ combustion occurs in the reservoir for a period of time; another exemplary method would be to use electromagnetic or radio frequency radiation; another exemplary method would be to inject high pressure, high temperature steam or another high temperature material into the reservoir; another exemplary method would be to use electrical resistance heating.

If an oxidizing agent is injected into the reservoir, the gasification and water-gas shift reactions are permitted to continue after oxygen injection is stopped.

Synthesis gas production is enabled through production wells. Thus, the process produces energy and chemical feedstock in the form of synthesis gas from the reservoir; a relatively clean fuel and useful and valuable chemical feedstock that can be used to generate heat and power or valuable chemicals, respectively.

Throughout this specification, numerous terms and expressions are used in accordance with their ordinary meanings. Provided below are definitions of some additional terms and expressions that are used in the description that follows.

"Oil" is a naturally occurring, unrefined petroleum product comprising hydrocarbon components. "Bitumen" and "heavy oil" are normally distinguished from other petroleum products based on their densities and viscosities. "Heavy oil" is typically classified with density which is between 920 and 1000 kg/m³. "Bitumen" typically has density greater than 1000 kg/m³. For purposes of this specification, the terms "oil", "bitumen" and "heavy oil" are used interchangeably such that each one includes the other. For example, where the term "bitumen" is used alone, it includes within its scope "heavy oil". Non-hydrocarbon elements entrained in the oil either through suspension, sorption, emulsion, molecular bonding, or other means, which can be co-produced or mobilized by or with the oil, are included within this definition.

As used herein, "petroleum reservoir" refers to a subsurface formation that is primarily composed of a porous matrix which contains petroleum products, namely oil and gas. As used herein, "heavy oil reservoir" refers to a petroleum reservoir that is primarily composed of porous rock containing heavy oil. As used herein, "oil sands reservoir" refers to a petroleum reservoir that is primarily composed of porous rock containing bitumen. The "water phase" in a reservoir rock is the interstitial water present in the porous reservoir rock.

The "natural reservoir temperature" is an ambient temperature of a cold or unheated reservoir. The "reservoir temperature" may refer to natural reservoir temperature, or the temperature of a heated reservoir.

"Cracking" refers to splitting larger hydrocarbon chains into smaller-chained compounds. "Hydrogenation" refers to an addition of hydrogen to a hydrocarbon or refers to a substitution reaction where hydrogen is consumed.

The term *"in situ"* can refer to the environment of a subsurface oil sand reservoir. "In-situ" means "in position" or "in its original place".

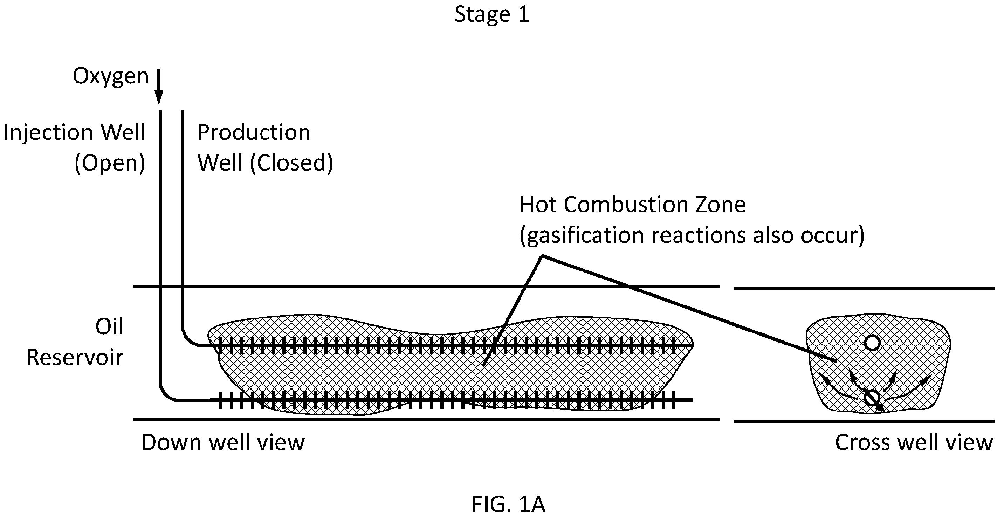

FIG. 1A to FIG. 1C illustrate an exemplary embodiment of the present invention for treating an oil reservoir in which oil and water within the reservoir are converted to synthesis gas.

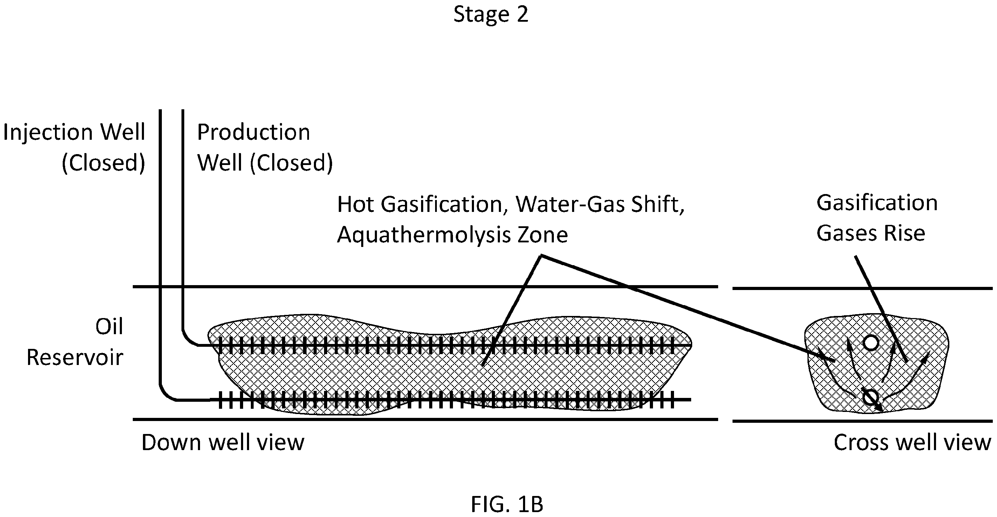

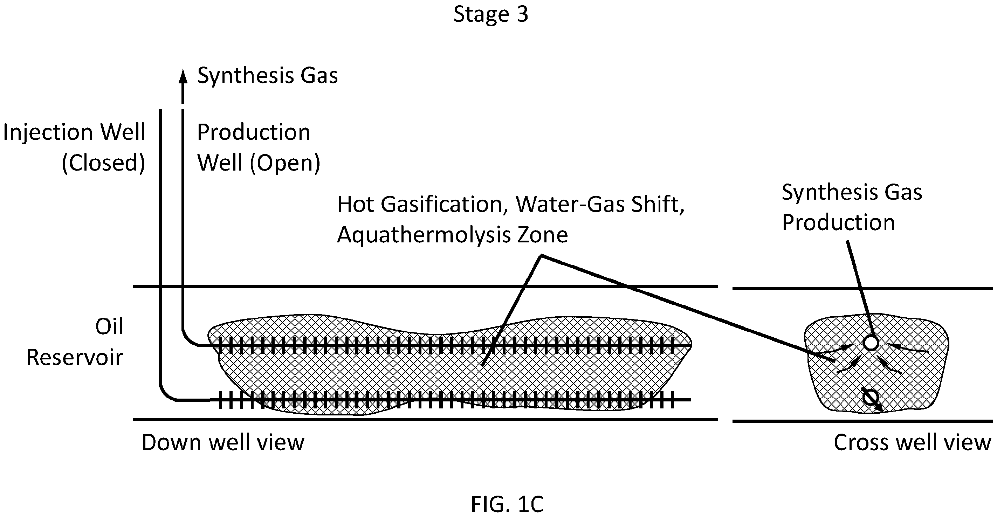

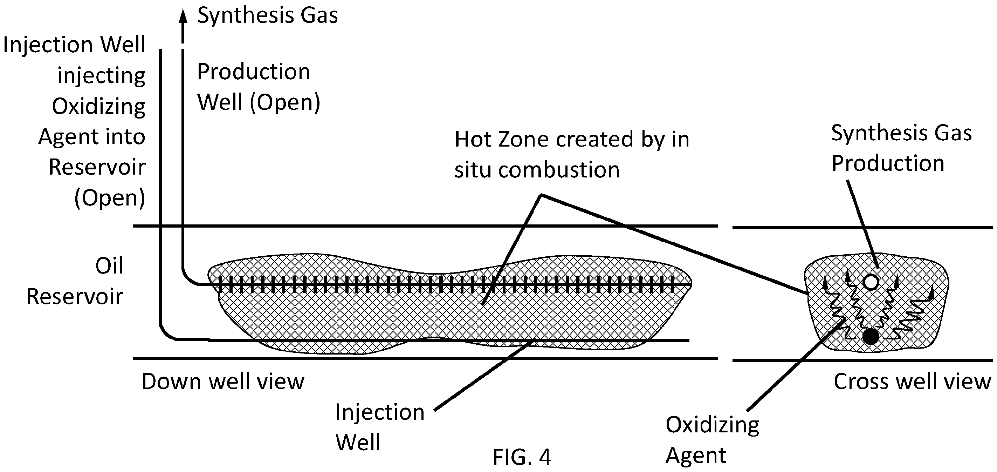

In the embodiment illustrated in FIG. 1A to FIG. 1C, the technology is using an inverted Steam-Assisted Gravity Drainage well configuration. The exemplary embodiment in FIG. 1A to FIG. 1C includes three stages per cycle. In Stage 1 (FIG. 1A), oxygen is injected into the reservoir where a portion of the bitumen is combusted to generate the temperatures (for example, >700°C) required for the gasification, water-gas shift, and/or aquathermolysis reactions. In Stage 2 (FIG. 1B), oxygen injection is stopped and the remaining oxygen in the reservoir is consumed. Since the reservoir in the near well region is hot, gasification, water-gas shift, and aquathermolysis reactions continue. The gas products from the reactions accumulate in the reservoir. Thereafter, Stage 3 (FIG. 1C) is initiated, when the production well is opened which then produces synthesis gas to surface. After the synthesis gas production has dropped to non-commercial rates, the process may be re-started with Stage 1. The method is not limited to horizontal wells but also can be done with vertical and deviated and multilateral wells. The method can be equally applied in a gas reservoir. The injection of an oxidizing agent can continue even during production of the synthesis gas, as illustrated in FIG. 4.

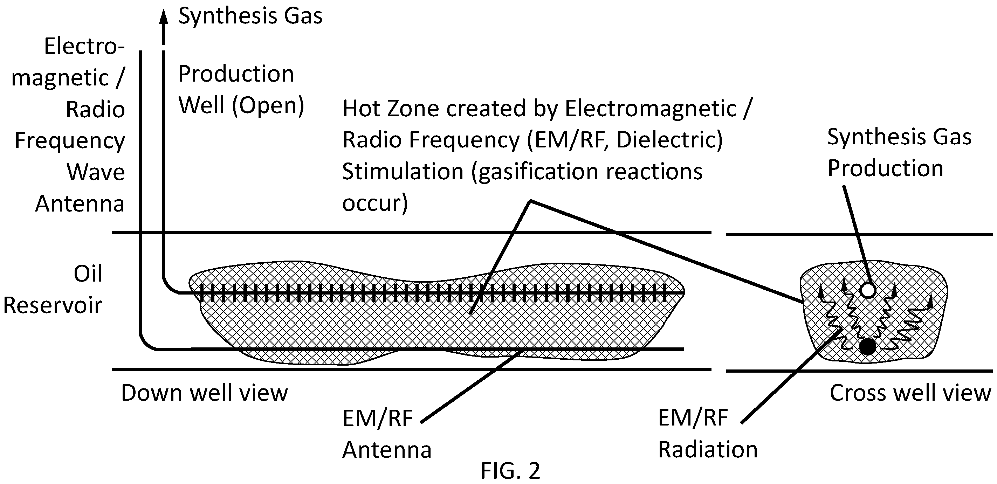

Another embodiment of the method is shown in FIG. 2. In this implementation, heat provided to the reservoir is done by using electromagnetic / radio frequency antenna. The hot reservoir undergoes gasification, water-gas shift, and aquathermolysis reactions which generate hydrogen, carbon oxides, and other gases within the reservoir. The generated synthesis gas is produced to the surface through the production well. The method is not limited to horizontal wells but also can be done with vertical and deviated and multilateral wells. The method can be equally applied in a gas reservoir.

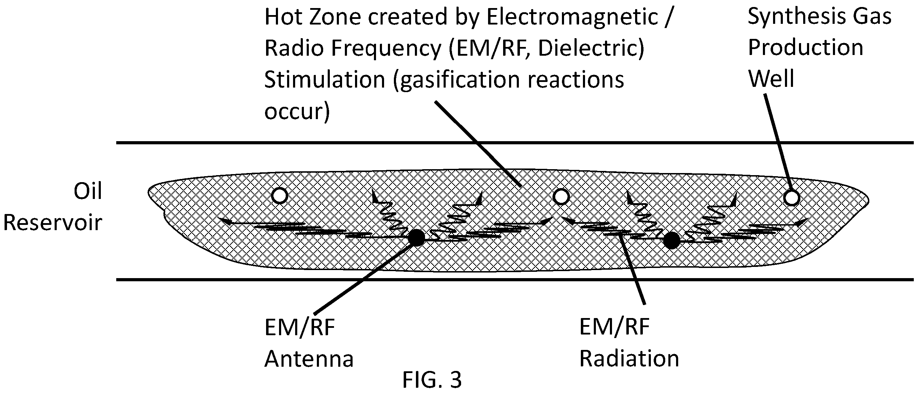

Another embodiment is illustrated in FIG. 3, shown in the cross-well direction, illustrates electromagnetic/radio frequency heaters positioned between a plurality of hydrogen production wells. The method is not limited to horizontal wells but also can be done with vertical and deviated and multilateral wells. The method can be equally applied in a gas reservoir.

The reactions generate gas which then enables gravity drainage (due to density difference) of hot mobilized oil and steam condensate towards the base of the gasification reaction chamber. Thus, the process sustains itself by moving mobilized oil towards the reactive zone above and around the injection well. This helps with gasification reactions and maintains the high temperature (for example 700+°C) zone near the well pair.

In another implementation, a single well can be used where oxygen is injected along one part of the well and synthesis gas production occurs along another part of the well. The well can be vertical, deviated, or horizontal.

In a further implementation, heating of the reservoir can be done by electromagnetic or radio frequency waves.

In a further implementation, heating of the reservoir can be done by using high pressure, high temperature steam.

### A. Heating the reservoir

The exemplary methods in a first step heat the reservoir to a temperature where gasification and/or water-gas shift reactions can take place between the oil and water within the reservoir.

The heat can be delivered to the reservoir through a variety of methods commonly known in the art. Commercially available methods include oxygen injection, and in some exemplary methods the combustion step has oxygen injected into the reservoir for a period of time where a fraction of the petroleum is combusted to generate heat within the reservoir to achieve temperatures on the order of 400-700°C. Other modes of heating known in the art include electromagnetic or radio frequency based heating. Other modes of heating include injecting hot materials into the reservoir.

After the heat is injected to the reservoir, then if done by combustion, oxygen injection may be stopped and the reservoir left to soak at the elevated temperature achieved by the combustion step. If heated by electromagnetic heating, then this heating can continue to keep the reservoir hot at the desired temperature.

### B. Gasification, Water-Gas Shift, and Aquathermolysis Reactions Period

During the period of time at which the reservoir is at elevated temperature, gasification and water-gas shift and aquathermolysis reactions may occur with consequent generation of hydrogen, hydrogen sulphide, carbon monoxide, carbon dioxide, and steam (water vapour). As the reactions occur in the reservoir, the gas components collect within the reservoir space.

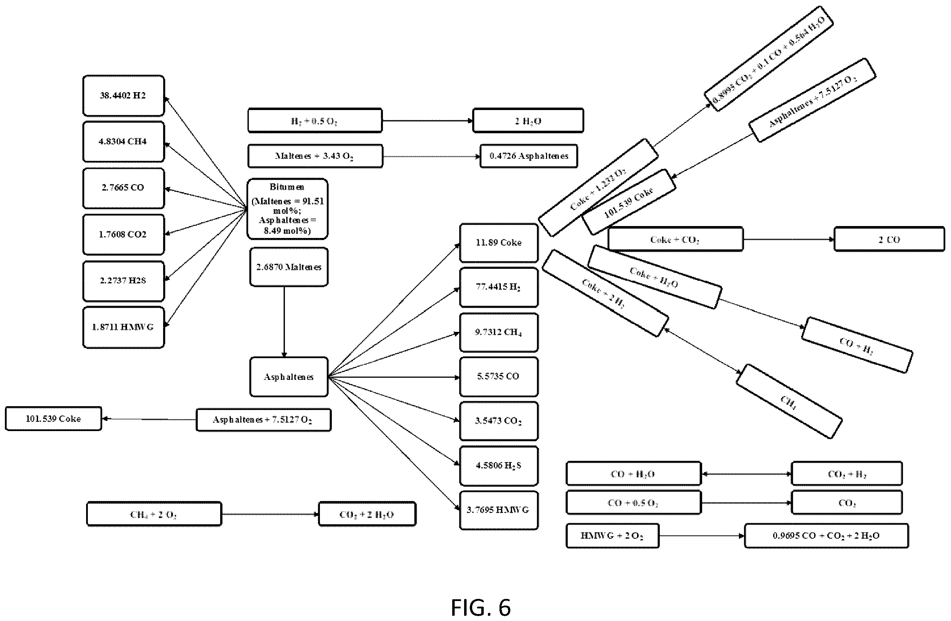

FIG. 6 illustrates some of the reactions that may occur in the reservoir. In FIG. 6, fuel for oxidation and gasification is the bitumen and coke that forms from reactions that occur during the process. Bitumen can be represented as a mixture of maltenes (saturates, aromatics, and resins) and asphaltenes (large cyclic compounds with large viscosity). During oxidation, maltenes can be converted into asphaltenes. Asphaltenes can be converted, via both low and high temperature oxidation as well as thermal cracking, into a variety of gas products including methane, hydrogen, carbon monoxide, carbon dioxide, hydrogen sulphide, and high molecular weight gases (e.g., propane, etc.) and coke. The coke can then be converted, through oxidation and gasification reactions, to products including but not limited to methane, water (vapour), carbon monoxide, carbon dioxide, and hydrogen. Also, methane can be converted, via gasification reactions, to hydrogen and carbon dioxide and carbon monoxide. Carbon monoxide and water (vapour) can be converted, via the water-gas shift reaction, to hydrogen and carbon dioxide. In general, fuel components in the system, e.g., oil, coke, methane, can be gasified to produce mixtures of carbon monoxide, carbon dioxide, hydrogen sulphide, and hydrogen.

### C. Production of Synthesis Gas

After enough time has elapsed for the generation of synthesis gas, then the gas is produced from the reservoir through the production well. Since synthesis gas is removed from the reservoir, this promotes the reactions to generate more synthesis gas. During some embodiments, oil accumulated in the vicinity of the lower oxygen injection well may be produced through the same oxygen injection well, or a separate well, and sold commercially, at the same time that synthesis gas is produced through the upper injection well. This oil can be produced either continuously, or at the same time as the synthesis gas production, or oxygen ports can inject oxygen from within the same well that oil is continuously or intermittently produced from. It may be advantageous to alter the production approach depending on properties such as the synthesis gas chamber evolution, oil mobility, reservoir pressure, or other factors. If done within the same wellbore there may be additional benefits such as downhole partial oxidation and partial upgrading/hydrogenation of the oil within the reservoir or pipe, combustion-gas expansion lift effects (controlled creation of some synthesis gas within the rising oil column drives fluid to surface like a geyser and creates simultaneous high volume vacuum/siphon), sand isolation or expulsion from the well within the reservoir or to surface by related pressure and mobilization effects, and heating of the oil/emulsion as it rises to surface. Some of the hydrogen may come from water which is co-produced with the oil. This can be done by adding small amounts of the down-going oxygen to the rising fluids at pyrophoric concentration/temperature conditions.

Those skilled in the art will know that various synthesis gas components may be separated through a wide variety of well-known processes including cryogenic distillation, pressure-swing absorption/adsorption, temperature-swing absorption/adsorption, membranes, molecular sieves, centrifuges, magnetic fields, gravity/buoyancy stratification/distillation, chemical reactions, thermal break-down, resonant fields, irradiation, electrical fields, acoustical destruction, acoustical segregation, and other methods.

### D. New cycle

If the heating is done in a cyclic manner, for example, from in situ combustion using oxygen injection as illustrated in FIGS. 1A to 1C, then after the temperature of the reservoir has dropped such that the gasification, water-gas shift, and aquathermolysis reaction rates have dropped so that synthesis gas production drops below a threshold value, then a new cycle of oxygen injection and consequent in situ combustion will start leading to heating of the reservoir. Thereafter, Steps A to C are repeated. If continuous heating is done by oxidization agent injection or electromagnetic or radio frequency or resistive heating methods, then continuous synthesis gas production can occur from the reservoir.

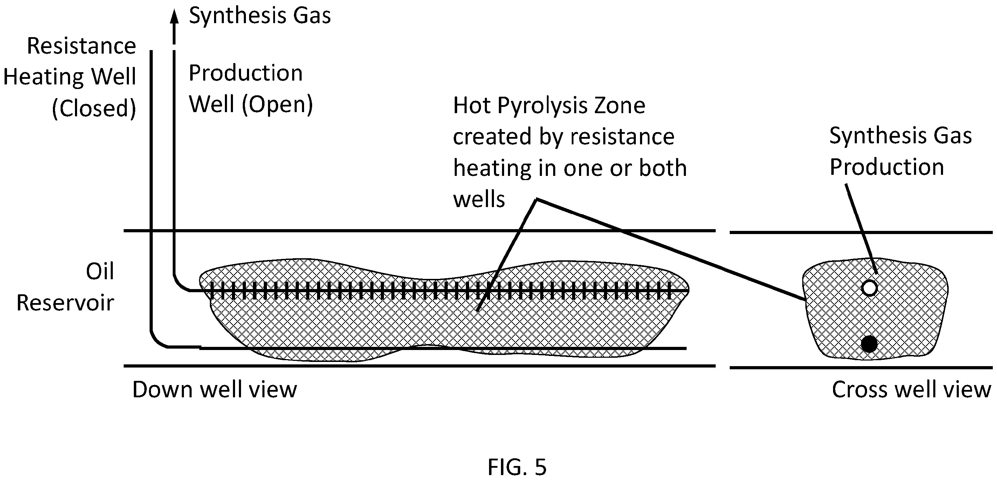

FIG. 5 illustrates an implementation of the present methods for treating an oil reservoir in which oil and water within the reservoir are converted to synthesis gas.

Some exemplary methods heat the reservoir to a temperature where gasification and water-gas shift reactions take place involving the oil and/or water within the reservoir by continuously injecting oxygen into the reservoir (as shown in FIG. 4) to cause in situ combustion reactions to occur that heat the reservoir to the preferred temperature between 400 and 700°C. This temperature range may be transiently reached or exceeded at interstitial scale or within regions of a reservoir and does not necessitate the entire average reservoir temperature to be within this range.

While the reservoir is being heated and is at elevated temperature, gasification and water-gas shift and aquathermolysis reactions occur with consequent production of hydrogen, hydrogen sulphide, carbon monoxide, carbon dioxide, and steam (water vapour). As the reactions occur in the reservoir, the gas components collect within the reservoir space but tend to rise due to buoyancy effects in the reservoir where the mobilized oil collects around the injection well sustaining the reactions there and the gases rise upwards towards the production well above and collect in the reservoir. The synthesis gas is produced from the reservoir through the production well.

As oxygen is injected into the reservoir, a reactive zone is created within the reservoir.

The reactive zone is characterized by the zone with temperature that is higher than the original reservoir temperature. In the reactive zone, the temperature rises above 450°C and at the reaction front, the temperature can exceed 900°C. With temperatures more than 400°C, gasification reactions occur within the hot zone which generate hydrogen which is exclusively produced by the upper production well to the surface. Within the hot zone around the injection well, heated oil drains and accumulates around the injection well thus supplying more fuel for the reactions that occur around the injection well.

The synthesis gas generated from the methods taught here can be used to generate power, heat, combusted to produce steam which can be used to generate power, or steam for other in situ oil recovery processes, or as a feedstock material for producing other chemicals including fuel, plastic, methanol, urea, hydrogen, sulphur, etc.

Unless the context clearly requires otherwise, throughout the description and the claims:
- "comprise", "comprising", and the like are to be construed in an inclusive sense, as opposed to an exclusive or exhaustive sense; that is to say, in the sense of "including, but not limited to".
- "connected", "coupled", or any variant thereof, means any connection or coupling, either direct or indirect, between two or more elements; the coupling or connection between the elements can be physical, logical, or a combination thereof.
- "herein", "above", "below", and words of similar import, when used to describe this specification shall refer to this specification as a whole and not to any particular portions of this specification.
- "or", in reference to a list of two or more items, covers all of the following interpretations of the word: any of the items in the list, all of the items in the list, and any combination of the items in the list.
- the singular forms "a", "an" and "the" also include the meaning of any appropriate plural forms

Words that indicate directions such as "vertical", "transverse", "horizontal", "upward", "downward", "forward", "backward", "inward", "outward", "vertical", "transverse", "left", "right", "front", "back", "top", "bottom", "below", "above", "under", and the like, used in this description and any accompanying claims (where present) depend on the specific orientation of the apparatus described and illustrated. The subject matter described herein may assume various alternative orientations. Accordingly, these directional terms are not strictly defined and should not be interpreted narrowly.

Where a component (e.g. a circuit, module, assembly, device, etc.) is referred to herein, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

The foregoing is considered as illustrative only of the principles of the invention. The scope of the claims should not be limited by the exemplary embodiments set forth in the foregoing, but should be given the broadest interpretation consistent with the specification as a whole.

## Claims

1. A method for treating a petroleum reservoir to recover synthesis gas and mobilized petroleum therefrom, the reservoir containing petroleum and water, the method comprising the steps of:
a. providing at least one production well in the reservoir, the at least one production well situated in an upper part of the reservoir;
b. providing at least one heating well in the reservoir beneath the at least one production well for treating a lower part of the reservoir with heat;
c. using the heat, heating a portion of the reservoir directly beneath the at least one production well to a temperature sufficient to cause at least one of gasification, water-gas shift and aquathermolysis reactions to occur within the portion of the reservoir, the at least one of the reactions involving at least one of the petroleum and the water;
d. allowing the at least one of gasification, water-gas shift and aquathermolysis reactions to produce synthesis gas from the at least one of the petroleum and the water in the portion of the reservoir, the synthesis gas comprising hydrogen gas and mobilizing a portion of the petroleum to form the mobilized petroleum;
e. allowing the synthesis gas to rise toward the at least one production well as the mobilized petroleum accumulates in the portion of the reservoir;
f. producing at least a portion of the synthesis gas to surface through the at least one production well; **characterized in that**
g. operating the at least one heating well as an at least one additional production well to produce a portion of the mobilized petroleum to the surface through the at least one additional production well simultaneously with production to the surface of the portion of the synthesis gas through the at least one production well.

2. The method of claim 1 wherein the step of treating the lower part of the reservoir with the heat comprises injecting an oxidizing agent through the at least one heating well into the reservoir to oxidize at least a portion of the petroleum and thereby heating the portion of the reservoir.

3. The method of claim 1 wherein the step of treating the lower part of the reservoir with the heat comprises positioning an electromagnetic or radio-frequency antenna in the at least one heating well and thereby generating electromagnetic or radio-frequency waves and thereby heating the portion of the reservoir.

4. The method of claim 1 wherein the step of treating the lower part of the reservoir with the heat comprises positioning a resistance-based heating system in the at least one heating well and thereby heating the portion of the reservoir.

5. The method of claim 1 wherein step d. takes place for a period of one week to twelve months.

6. The method of claim 2 wherein at least one of water, steam, combustible fuels and waste products is injected with or separately from the injecting of the oxidizing agent.

7. The method of claim 1 further comprising repeating and alternating the steps of heating the portion of the reservoir and producing the portion of the synthesis gas to the surface.

8. A system for treating a petroleum reservoir to recover synthesis gas and mobilized petroleum therefrom, the reservoir containing petroleum and water, the synthesis gas comprising hydrogen gas, the system comprising:
at least one production well positioned in an upper part of the reservoir; and
at least one heating well for heating a portion of the reservoir directly beneath the at least one production well and thereby generating the synthesis gas from at least one of the petroleum and the water by at least one of gasification, water-gas shift and aquathermolysis reactions and mobilizing a portion of the petroleum to form the mobilized petroleum, the at least one heating well positioned in a lower part of the reservoir;
the at least one production well configured to receive and produce a portion of the synthesis gas to surface as the mobilized petroleum accumulates in the portion of the reservoir; and
the at least one heating well configured for operation as an additional production well to produce the mobilized petroleum simultaneously with production to the surface of the portion of the synthesis gas through the at least one production well.

9. The system of claim 8 wherein at least one heating well comprises a heat supply selected from the group consisting of an oxidizing-agent injector, an electromagnet, a radio-frequency antenna, and a hot material injector.

## Patentansprüche

1. Verfahren zur Behandlung eines Erdölreservoirs zur Gewinnung von Synthesegas und mobilisiertem Erdöl daraus, wobei das Reservoir Erdöl und Wasser enthält, wobei das Verfahren die Schritte umfasst:
a. Bereitstellen wenigstens einer Förderbohrung in dem Reservoir, wobei die wenigstens eine Förderbohrung in einem oberen Teil des Reservoirs angeordnet ist;
b. Bereitstellen wenigstens einer Heizbohrung in dem Reservoir unterhalb der wenigstens einen Förderbohrung zum Behandeln eines unteren Teils des Reservoirs mit Wärme;
c. unter Verwendung der Wärme Erhitzen eines Teils des Reservoirs direkt unterhalb der wenigstens einen Förderbohrung auf eine Temperatur, die ausreicht, um das Erfolgen wenigstens einer von Vergasungs-, Wasser-Gas-Shift- und Aquathermolysereaktionen innerhalb des Teils des Reservoirs zu bewirken, wobei bei der wenigstens einen der Reaktionen wenigstens eines von dem Erdöl und dem Wasser beteiligt ist;
d. Ermöglichen, dass die wenigstens eine von Vergasungs-, Wasser-Gas-Shift- und Aquathermolysereaktionen Synthesegas aus dem wenigstens einen von Erdöl und dem Wasser in dem Teil des Reservoirs erzeugt, wobei das Synthesegas Wasserstoffgas umfasst, und Mobilisieren eines Teils des Erdöls, um das mobilisierte Erdöl zu bilden;
e. Ermöglichen, dass das Synthesegas in Richtung zu der wenigstens einen Förderbohrung ansteigt, während sich das mobilisierte Erdöl in dem Teil des Reservoirs sammelt;
f. Fördern wenigstens eines Teils des Synthesegases durch die wenigstens eine Förderbohrung an die Oberfläche; **gekennzeichnet durch**
g. Betreiben der wenigstens einen Heizbohrung als wenigstens eine zusätzliche Förderbohrung, um einen Teil des mobilisierten Erdöls durch die wenigstens eine zusätzliche Förderbohrung gleichzeitig mit der Förderung des Teils des Synthesegases durch die wenigstens eine Förderbohrung an die Oberfläche zu fördern.

2. Verfahren nach Anspruch 1, wobei der Schritt der Behandlung des unteren Teils des Reservoirs mit der Wärme Einspritzen eines Oxidationsmittels durch die wenigstens eine Heizbohrung in das Reservoir umfasst, um wenigstens einen Teil des Erdöls zu oxidieren und dadurch den Teil des Reservoirs zu erhitzen.

3. Verfahren nach Anspruch 1, wobei der Schritt der Behandlung des unteren Teils des Reservoirs mit der Wärme Anordnen einer elektromagnetischen oder Radiofrequenzantenne in der wenigstens einen Heizbohrung und dadurch das Erzeugen von elektromagnetischen oder Radiofrequenzwellen und dadurch Erhitzen des Teils des Reservoirs umfasst.

4. Verfahren nach Anspruch 1, wobei der Schritt der Behandlung des unteren Teils des Reservoirs mit der Wärme Anordnen eines Heizsystems auf Widerstandsbasis in der wenigstens einen Heizbohrung und dadurch das Erhitzen des Teils des Reservoirs umfasst.

5. Verfahren nach Anspruch 1, wobei Schritt d. für einen Zeitraum von einer Woche bis zwölf Monaten stattfindet.

6. Verfahren nach Anspruch 2, wobei wenigstens eines von Wasser, Dampf, brennbaren Brennstoffen und Abfallprodukten mit oder getrennt von dem Einspritzen des Oxidationsmittels eingespritzt wird.

7. Verfahren nach Anspruch 1, ferner umfassend Wiederholen und Abwechseln der Schritte des Erhitzens des Teils des Reservoirs und Förderns des Teils des Synthesegases an die Oberfläche.

8. System zur Behandlung eines Erdölreservoirs zur Gewinnung von Synthesegas und mobilisiertem Erdöl daraus, wobei das Reservoir Erdöl und Wasser enthält, wobei das Synthesegas Wasserstoffgas umfasst, wobei das System umfasst:
wenigstens eine Förderbohrung, die in einem oberen Teil des Reservoirs angeordnet ist; und
wenigstens eine Heizbohrung zum Erhitzen eines Teils des Reservoirs direkt unterhalb der wenigstens einen Förderbohrung und dadurch Erzeugen des Synthesegases aus dem wenigstens einen von dem Erdöl und dem Wasser durch wenigstens eine von Vergasungs-, Wasser-Gas-Shift- und Aquathermolysereaktionen und Mobilisieren eines Teils des Erdöls, um das mobilisierte Erdöl zu bilden, wobei die wenigstens eine Heizbohrung in einem unteren Teil des Reservoirs angeordnet ist;
wobei die wenigstens eine Förderbohrung dafür gestaltet ist, einen Teil des Synthesegases aufzunehmen und zu Oberfläche zu fördern, während sich das mobilisierte Erdöl in dem Teil des Reservoirs sammelt; und
die wenigstens eine Heizbohrung für den Betrieb als zusätzliche Förderbohrung gestaltet ist, um das mobilisierte Erdöl gleichzeitig mit der Förderung des Teils des Synthesegases durch die wenigstens eine Förderbohrung an die Oberfläche zu fördern.

9. System nach Anspruch 8, wobei wenigstens eine Heizbohrung eine Wärmezufuhr ausgewählt aus der Gruppe bestehend aus einem Oxidationsmittelinjektor, einem Elektromagneten, einer Radiofrequenzantenne und einem Heißmaterialinjektor umfasst.

## Revendications

1. Procédé pour le traitement d'un réservoir de pétrole pour récupérer du gaz de synthèse et du pétrole mobilisé de celui-ci, le réservoir contenant du pétrole et de l'eau, le procédé comprenant les étapes de :
a. fourniture d'au moins un puits de production dans le réservoir, l'au moins un puits de production étant situé dans une partie supérieure du réservoir ;
b. fourniture d'au moins un puits de chauffage dans le réservoir en dessous de l'au moins un puits de production pour traiter une partie inférieure du réservoir avec de la chaleur ;
c. utilisation de la chaleur, chauffage d'une partie du réservoir directement en dessous de l'au moins un puits de production jusqu'à une température suffisante pour causer au moins l'une parmi des réactions de gazéification, de déplacement de gaz à l'eau et d'aquathermolyse d'avoir lieu à l'intérieur de la partie du réservoir, l'au moins une des réactions impliquant au moins l'un parmi le pétrole et l'eau ;
d. le fait de permettre à l'au moins une des réactions de gazéification, de déplacement de gaz à l'eau et d'aquathermolyse de produire du gaz de synthèse à partir de l'au moins un parmi le pétrole et l'eau dans la partie du réservoir, le gaz de synthèse comprenant du gaz hydrogène et mobilisant une partie du pétrole pour former le pétrole mobilisé ;
e. le fait de permettre au gaz de synthèse de s'élever vers l'au moins un puits de production tandis que le pétrole mobilisé s'accumule dans la partie du réservoir ;
f. production d'au moins une partie du gaz de synthèse jusqu'à la surface à travers l'au moins un puits de production ; **caractérisé en ce que**
g. l'exploitation de l'au moins un puits de chauffage en tant qu'au moins un puis de production supplémentaire pour produire une partie du pétrole mobilisé jusqu'à la surface à travers l'au moins un puits de production supplémentaire simultanément à la production jusqu'à la surface de la partie du gaz de synthèse à travers l'au moins un puits de production.

2. Procédé selon la revendication 1, l'étape de traitement de la partie inférieure du réservoir avec de la chaleur comprenant une injection d'un agent oxydant à travers l'au moins un puits de chauffage dans le réservoir pour oxyder au moins une partie du pétrole et chauffer ainsi la partie du réservoir.

3. Procédé selon la revendication 1, l'étape de traitement de la partie inférieure du réservoir avec de la chaleur comprenant le positionnement d'une antenne électromagnétique ou de radiofréquence dans l'au moins un puits de production et ainsi la génération d'ondes électromagnétiques ou de radiofréquences et chauffant ainsi la partie du réservoir.

4. Procédé selon la revendication 1, l'étape de traitement de la partie inférieure du réservoir avec la chaleur comprenant le positionnement d'un système de chauffage à base de résistance dans l'au moins un puits de chauffage et ainsi le chauffage de la partie du réservoir.

5. Procédé selon la revendication 1, l'étape d. ayant lieu pendant une période d'une semaine à douze mois.

6. Procédé selon la revendication 2, au moins l'un parmi de l'eau, de la vapeur, des carburants combustibles et des produits de déchets étant injecté avec ou séparément de l'injection de l'agent oxydant.

7. Procédé selon la revendication 1 comprenant en outre la répétition et l'alternance des étapes de chauffage de la partie du réservoir et de production de la partie du gaz de synthèse jusqu'à la surface.

8. Système pour le traitement d'un réservoir de pétrole pour récupérer du gaz de synthèse et du pétrole mobilisé de celui-ci, le réservoir contenant du pétrole et de l'eau, le gaz de synthèse comprenant du gaz hydrogène, le système comprenant :
au moins un puits de production positionné dans une partie supérieure du réservoir ; et
au moins un puits de chauffage pour chauffer une partie du réservoir directement en dessous de l'au moins un puits de production et ainsi générer le gaz de synthèse à partir d'au moins l'un parmi le pétrole et l'eau par au moins l'une parmi des réactions de gazéification, de déplacement de gaz à l'eau et d'aquathermolyse et la mobilisation d'une partie du pétrole pour former le pétrole mobilisé, l'au moins un puits de chauffage étant positionné dans une partie inférieure du réservoir ;
l'au moins un puits de production étant configuré pour recevoir et produire une partie du gaz de synthèse jusqu'à la surface tandis que le pétrole mobilisé s'accumule dans la partie du réservoir ; et
l'au moins un puits de chauffage étant configuré pour une exploitation en tant que puits de production supplémentaire pour produire le pétrole mobilisé simultanément à la production jusqu'à la surface de la partie du gaz de synthèse à travers l'au moins un puits de production.

9. Système selon la revendication 8, au moins un puits de chauffage comprenant une alimentation en chaleur choisie dans le groupe constitué par un injecteur d'agent oxydant, un électroaimant, une antenne de radiofréquence et un injecteur de matière chaude.
